# EUROPÄISCHE PATENTANMELDUNG

(11) **EP 0 582 080 A1**
(43) Veröffentlichungstag der Anmeldung: **09.02.1994**
(21) Anmeldenummer: 93110245.3
(22) Anmeldetag: 26.06.1993
(51) Int. Cl.: G06K 19/07

(54) **Digitales Notizspeichergerät**

(30) Priorität: 04.08.1992 CH 2444/92
(71) Anmelder: ALLTRONIC AG FüR SICHERHEITSTECHNIK, CH-4123 Allschwil (CH)
(72) Erfinder: Schmidlin, René Rudolf, CH-4125 Riehen (CH)
(74) Vertreter: Troesch Scheidegger Werner AG

(57) **Zusammenfassung**

Das Notizspeichergerät mit den erforderlichen Eingabe- und Speicherbauteilen (1,7) und einem Eingabeberechtigungsspeicher (5, 5a) ist als Arbeitsrapport-Aufnahmegerät ausgelegt, wobei der Datenspeicher (7) zwecks zentraler Verarbeitung an einer Auswerteeinheit aus dem Gerät entfernbar ist.

## Beschreibung

Die vorliegende Erfindung betrifft ein digitales Notizspeichergerät nach dem Oberbegriff von Anspruch 1.

Derartige digitale Notizspeichergeräte sind bekannt, beispielsweise als Ersatz von Agenden, Notizbüchern etc.

Die vorliegende Erfindung geht von dem Problem aus, dass es heute üblich ist, auf Baustellen, wo Gruppen von Handwerkern, Technikern etc. arbeiten, die jeweiligen Arbeitsrapporte von Hand auszufüllen, und es ausserordentlich zeitaufwendig und damit auch kostenaufwendig ist, anhand der abgelieferten Arbeitsrapporte Uebersichten, Rechnungsstellungen etc. vorzunehmen. Die vorliegende Erfindung setzt sich zum Ziel, dem abzuhelfen.

Zu diesem Zweck zeichnet sich das eingangs erwähnte digitale Notizspeichergerät nach dem kennzeichnenden Teil von Anspruch 1 aus.

Bevorzugte Ausführungsbeispiele sind in den Ansprüchen 2 bis 5 spezifiziert.

Die Erfindung geht davon aus, an den erwähnten Arbeitsplätzen, für jeden Beschäftigten zugänglich, ein erfindungsgemässes Notizspeichergerät ortsfest vorzusehen, die Arbeitsrapporte personenspezifisch einzugeben und periodisch den Datenspeicher mit den gespeicherten Daten aus dem Gerät zu entfernen, einzusammeln oder an eine zentrale Auswerteeinheit einzusenden, wo dann auf einfache Art und Weise die Arbeitsrapportdaten nach Wunsch ausgewertet werden können. Eingabe des auf Berechtigung zu prüfenden Codes erfolgt z.B. per Tastatur, eine Identifikationskarte etc.

Bevorzugterweise, und dem Wortlaut von Anspruch 2 folgend, wird als Datenspeicher ein aktiver Halbleiter-Datenspeicher vorgesehen mit integrierter Speisung.

Im weiteren wird bevorzugterweise, nach dem Wortlaut von Anspruch 3, das Gerät so ausgebildet, dass es netzunabhängig gespiesen werden kann, über Batterien oder einen Akkumulator.

Durch Vorgehen nach dem Wortlaut von Anspruch 4 wird sichergestellt, dass eine jeweilige Person nur auf das ihr zugeordnete Segment im Datenspeicher zum Eingeben von Daten Zugriff hat. Nur eine beschränkte Anzahl von Personen hat weiter den Zugriff auf den gesamten Datenspeicher, kann darin Daten ändern und insbesondere dessen Inhalt an einer vorgesehenen Digitalanzeige ausgeben. Ansonsten ist für die weitaus grössere Zahl von eingabeberechtigten Personen der Datenspeicher ein Nur-Schreibespeicher; gelesen wird der Speicher nach seiner Entfernung und, wie erwähnt, seinem Ueberbringen zu einer zentralen Auswertestation.

Aus der US-A-4 719 338 ist ein taschenrechnerartiges Gerät bekannt, bei dem eine erste Karte der Art einer Kreditkarte einführbar ist, welche als ROM ausgebildet ist. Gleichzeitig kann eine zweite Karte, als EAROM ausgebildet, eingeführt werden. Am Gerät können Daten auf der zweiterwähnten Karte geändert werden, und es erlaubt, nebst der Aufbewahrung der Karten, eine Datenverarbeitung, welche Lesen der Daten von der ROM-Karte und Lesen/Schreiben von Daten auf bzw. von der EAROM-Karte umfasst. Als Arbeitsrapport-Aufnahmegerät ist dieses vorbekannte Gerät nicht einsetzbar, weil eine Prüfung von zugriffsberechtigten Personen auf den Datenspeicher nicht anhand eines geräteinternen Berechtigungsspeichers erfolgt, sondern höchstens anhand übereinstimmender Daten auf beiden Karten. Zudem ist eine Zuordnung von Berechtigten an Segmente ein und desselben Datenspeichers, wie für das erfindungsgemässe Arbeitsrapport-Aufnahmegerät bevorzugt, nicht möglich.

Aus der US-A-4 641 241 ist weiter ein Gerät zur EDV-mässigen Auswertung von Abstimmungsresultaten im Sinne von Urnengängen bekannt. Die möglichen Abstimmungsvarianten sind spezifischen Eingabetastatur-Bedienungsmöglichkeiten zugeordnet. Nach Prüfung auf Vorliegen einer der definierten Bedienungsmöglichkeiten wird die jeweilige Häufigkeit der Wahl der verschiedenen Möglichkeiten je für eine Weiterverarbeitung abgespeichert. Eine Ueberprüfung der Zugriffsberechtigung auf die vorgesehenen Speicher anhand in einem Berechtigungsspeicher am Gerät festgelegter Daten, wie für das erfindungsgemässe Arbeitsrapport-Aufnahmegerät notwendig, ist nicht vorgesehen, weit weniger die erfindungsgemäss bevorzugte Zuordnung berechtigter Personen zu Speichersegmenten ein und desselben Datenspeichers.

Im weiteren kann auf die EP-A-0 057 602, die DE-A-32 22 288 sowie auf Patent Abstracts of Japan, Vol. 9, Nr. 122 (P-359), 28. Mai 1985, und JP,A,60 007 574 (Fujitsu K. K.), 16. Januar 1985, hingewiesen werden.

Die Erfindung wird anschliessend anhand zweier Figuren beispielsweise erläutert.

Es zeigen:
- Fig. 1: eine perspektivische Ansicht eines erfindungsgemässen Arbeitsrapport-Speichergerätes;
- Fig. 2: ein vereinfachtes Funktionsblockdiagramm eines erfindungsgemässen Gerätes.

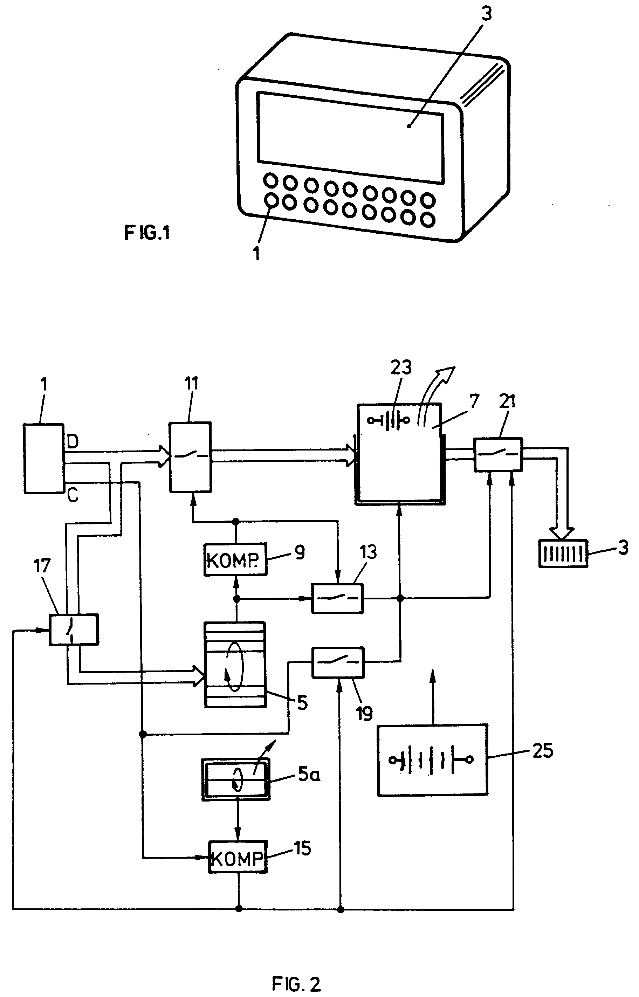

Gemäss Fig. 1 ist das erfindungsgemässe Gerät in sich geschlossen und ist kästchenartig, beispielsweise an der Wand an einer Baustelle, montierbar. Es weist ein alphanumerisches Tastaturfeld 1 auf sowie, in einer bevorzugten Ausführungsform, eine LCD-Anzeige 3.

Gemäss Fig. 2 wird an der Tastatur 1 von einer jeweils eingebenden Person ihr persönlicher Code C eingegeben. In einem Berechtigungsspeicher 5 sind alle persönlichen Codes C abgespeichert, welche berechtigtermassen einen Schreibezugriff auf den Datenspeicher 7 haben. Der von einer betrachteten Person eingegebene persönliche Code C wird an einer digitalen Komparatoreinheit 9 mit allen im Berechtigungsspeicher 5 abgespeicherten Berechtigungscodes verglichen. Bei Uebereinstimmung eines im Berechtigungsspeicher 5 vorabgespeicherten Berechtigungscodes mit dem über die Tastatur 1 eingegebenen persönlichen Code C wird, wie mit der Durchschalteinheit 11 schematisch dargestellt, eine Datenleitung D von der Tastatur 1 auf Dateneingänge am Datenspeicher 7 freigegeben.

Gleichzeitig wird bei der erwähnten Uebereinstimmung der als übereinstimmend gefundene Berechtigungscode, wie schematisch mit der Durchschalteinheit 13 dargestellt, auf Adresseingänge am Datenspeicher 7 geschaltet. Damit werden nun die nachfolgend von der betrachteten Person eingegebenen Arbeitsrapportdaten an einem ihr zugeordneten Speichersegment entsprechend der Adressierung über Durchschalteinheit 13 im Speicher 7 abgelegt.

Die im Berechtigungsspeicher 5 vorabgespeicherten Berechtigungscodes sind gleichberechtigt.

In einem Berechtigungsspeichersegment 5a ist eine beschränkte Anzahl Berechtigungscodes vorabgespeichert, welche bezüglich derjenigen im Berechtigungsspeicher 5 eine höhere Zugriffspriorität aufweisen. Während der Berechtigungsspeicher 5 über die Tastatur in noch zu beschreibender Art und Weise geladen werden kann, sind die Berechtigungsangaben im Segment 5a nicht über die Tastatur des Gerätes, sondern nur extern, beispielsweise an der zentralen Auswerteeinheit, ladbar. Deshalb ist in einer bevorzugten Ausführungsvariante auch das Speichersegment 5a entweder als separater Bauteil, wie in Fig. 2 dargestellt, entfernbar und extern ladbar, oder es wird der gesamte Berechtigungsspeicher 5, 5a extern an einer eigens dafür vorgesehenen Einheit, beispielsweise der vorerwähnten zentralen Auswerteeinheit, geladen.

Jeder an der Tastatur 1 eingegebene persönliche Code C wird nun an einer weiteren digitalen Komparatoreinheit 15 auch daraufhin überprüft, ob er einem höher berechtigten Code im Segment 5a entspricht. Ist dies der Fall, so steuert der Ausgang der Komparatoreinheit 15 einerseits, wie schematisch mit der Durchschalteinheit 17 dargestellt, das Durchschalten an der Tastatur 1 eingegebener Daten auf den Berechtigungsspeicher 5, womit die höher berechtigte Person gemäss ihren Kennungscodes im Segment 5a in der Lage ist, die persönlichen Codes der an der Arbeitsstelle Arbeitenden in den Berechtigungsspeicher 5 einzugeben. Höher berechtigt ist beispielsweise ein Bauführer oder ein leitender Ingenieur.

Gleichzeitig wird vom Ausgang der Komparatoreinheit 15, wie wiederum schematisch mit der Durchschalteinheit 19 dargestellt, die Tastatur 1 direkt auf die Adresseingänge des Datenspeichers 7 geschaltet. Damit ist es möglich, dass die höher berechtigte Person nachmals Erkennungscodes C irgendeiner auf der Baustelle arbeitenden Person eingeben kann, welche nun direkt, unter Umgehung des Berechtigungsspeichers 5, auf die Adresseingänge des Datenspeichers 7 geschaltet wird.

Gleichzeitig wird, wie wiederum schematisch mit der Durchschalteinheit 21 dargestellt, der Ausgang des Datenspeichers auf die digitale Anzeige 3 durchgeschaltet, so dass auch die höher berechtigte Person den Speicherinhalt des Datenspeichers 7 der jeweiligen, durch den eingegebenen Code angesprochenen Person auslesen kann.

Der Datenspeicher 7 ist ausser für höher berechtigte Personen gemäss ihren Kennzeichen im Segment 5a ausschliesslich ein Schreibespeicher. Er ist in einer bevorzugten Ausführungsform als aktiver Halbleiterspeicher ausgebildet und mit einer integrierten elektrischen Speisung 23, nämlich einer Batterie, versehen. Zur Erlangung von Netzunabhängigkeit an den Baustellen ist das Gerät, wie mit dem Speisungsblock 25 dargestellt, mindestens netzunabhängig betreibbar, mittels vorzugsweise wiederladbarer Batterien.

Wesentlich ist die Entfernbarkeit des Datenspeichers 7 und dass letzterer mit Ausnahme von schreibberechtigten Personen am Gerät gesamthaft nicht gelesen werden kann. Jede eingebende Person kann nur, wiederum über die Durchschalteinheit 21, ihre eigenen, im Datenspeicher 7 abgelegten Daten an der digitalen Anzeige überprüfen.

Zusätzlich zur Tastatur kann eine Lesevorrichtung für Codekarten vorgesehen sein, so dass der jeweilige Code durch Einlesen einer persönlichen Erkennungskarte eingegeben werden kann.

Es kann auch zusätzlich ein Anschluss zum Betreiben eines Strichcode-Lasers bzw. eines Scanners vorgesehen sein.

## Patentansprüche

1. Digitales Notizspeichergerät mit einer Eingabetastatur (1), einem Datenspeicher (7), einem Eingabeberechtigungsspeicher (5, 5a), dessen Ausgang dann die Datenverbindung zwischen Tastatur (1) und Datenspeicher (7) erstellt, wenn vorgängig ein Code (C) eingegeben wurde, der mit einem im Berechtigungsspeicher (5, 5a) vorabgespeicherten Code übereinstimmt, dadurch gekennzeichnet, dass das Notizspeichergerät als Arbeitsrapport-Aufnahmegerät ausgelegt ist und hierzu der Datenspeicher (7) mit gespeicherten Daten aus dem Gerät entfernbar ist, zur zentralen Verarbeitung an einer Auswerteeinheit.

2. Gerät, vorzugsweise nach mindestens einem der Ansprüche, wie nach Anspruch 1, dadurch gekennzeichnet, dass der Datenspeicher ein aktiver Halbleiterspeicher ist und eine integrierte Speisung (23) aufweist.

3. Gerät, vorzugsweise nach mindestens einem der Ansprüche, wie nach einem der Ansprüche 1 oder 2, dadurch gekennzeichnet, dass es netzunabhängig betreibbar ist.

4. Gerät, vorzugsweise nach mindestens einem der Ansprüche, wie nach einem der Ansprüche 1 bis 3, dadurch gekennzeichnet, dass der Berechtigungsspeicher (5, 5a) die Verbindung von der Tastatur (1) nur zu einem Segment des Datenspeichers (7) erstellt, welches durch den momentan eingegebenen Code (C) angezeigt wird.

5. Gerät, vorzugsweise nach mindestens einem der Ansprüche, wie nach einem der Ansprüche 1 bis 4, dadurch gekennzeichnet, dass eine Digitalanzeige vorgesehen ist und der Berechtigungsspeicher (5, 5a) für eine beschränkte Anzahl Codes den Zugriff von der Tastatur auf den gesamten Datenspeicher (7) durchschaltet und/oder dessen Auslesen auf die Digitalanzeige (3).
